# EUROPÄISCHE PATENTSCHRIFT

(11) **EP 3 570 662 B1**
(45) Veröffentlichungstag und Bekanntmachung des Hinweises auf die Patenterteilung: **09.06.2021**
(21) Anmeldenummer: 18700281.1
(22) Anmeldetag: 10.01.2018
(51) Int. Cl.: A01G 24/50, A01C 1/04, A01G 24/22, A01G 24/12, A01G 24/44

(54) **VERFAHREN ZUR HERSTELLUNG EINER SAATGUTEINHEIT**
METHOD FOR PRODUCING A SEED UNIT
PROCÉDÉ DE FABRICATION D'UNE UNITÉ DE SEMENCE

(30) Priorität: 19.01.2017 DE 102017101031; 02.02.2017 DE 102017102081
(43) Veröffentlichungstag der Anmeldung: 27.11.2019
(73) Patentinhaber: SUET Saat- und Erntetechnik GmbH, 37269 Eschwege (DE)
(72) Erfinder: BECKER, Claudia, 37276 Meinhard Jestädt (DE)
(74) Vertreter: Kleine, Hubertus
(86) Internationale Anmeldenummer: PCT/EP2018/050528
(87) Internationale Veröffentlichungsnummer: WO 2018/134094

(56) Entgegenhaltungen:
- DE-A1- 2 115 714
- US-A- 3 524 279
- US-A- 3 524 279
- US-A- 3 733 745
- US-A- 3 733 745
- US-A1- 2005 097 816
- US-A1- 2005 097 816
- US-A1- 2011 173 879
- US-A1- 2011 173 879

## Beschreibung

Die Erfindung betrifft ein Verfahren zur Herstellung einer Saatguteinheit mit einer Tablette aus wasserspeicherndem Material, mit Saatgut und mit einer Umhüllung der Tablette und des Saatguts.

Saatguteinheiten mit einer Tablette aus wasserspeicherndem Material, beispielsweise gepresstem Schichtsilikat, ermöglichen ein Aussäen von Saatgut, ohne dass das Saatgut unter die Oberfläche eines Erdbodens gebracht werden muss. Insbesondere hat sich gezeigt, dass auch eine Aufforstung von Waldgebieten mit Bäumen mithilfe derartiger Saatguteinheiten möglich ist, indem die Saatguteinheiten auf dem Waldboden platziert werden.

Aus der Druckschrift WO 2015/030656 A1 ist beispielsweise eine Saatguteinheit bekannt, bei der ein Saatkorn in einer Mulde einer Tablette positioniert ist. Eine wasserlösliche Umhüllung der Tablette ist durch seitlich überstehende Papierscheiben gebildet, zwischen denen die Tablette positioniert wird. Die Papierscheiben werden am überstehenden Rand miteinander verklebt, um die Umhüllung zu schließen. Bevorzugt wird Papier mit kurzen Zellulosefasern verwendet, das sich schnell auflöst und schließlich auch kompostiert.

Nachteilig an der beschriebenen Saatguteinheit ist die aufwändige Verarbeitung, bei der jede Tablette mit dem eingelegten Saatgut einzeln zwischen zwei entsprechend vorbereitete Papierscheiben positioniert werden muss, die dann nach einem Kleberauftrag am Rand miteinander verbunden werden müssen.

Aus den Druckschriften US 3,733,745 A , US 3,524,279 A, US 2005/097816 A1 und US 2011/0173879 A1 sind Saatguteinheiten bekannt, die in eine am Rand verschlossene Kunststofffolie eingepackt sind. Die Kunststofffolie ist gemäß der Schrift US 3,733,745 A mit Einschnitten versehen, um eine Wasseraufnahme des Saatguts zu ermöglichen. Gemäß der Druckschrift US 2011/0173879 A1 umgibt eine wasserlösliche Kunststofffolie das Saatgut. Zur Herstellung werden dabei eine oder auch zwei getrennte Kunststofffolien um eine vorgefertigte Saatguttablette gelegt und am Rand verschweißt. Nachteilig ist, dass die Saatguttablette zunächst vorgefertigt und dann separat umhüllt wird.

Es ist eine Aufgabe der vorliegenden Erfindung, ein Herstellungsverfahren für eine Saatguteinheit der eingangs genannten Art zu schaffen, mit dem Saatguteinheiten leicht auch in größeren Mengen mit geringerem Herstellungsaufwand produzierbar sind.

Diese Aufgabe wird durch ein Herstellungsverfahren mit den Merkmalen des unabhängigen Anspruchs gelöst. Vorteilhafte Ausgestaltungen und Weiterbildungen sind Gegenstand der abhängigen Ansprüche.

Ein erfindungsgemäßes Verfahren zur Herstellung einer Saatguteinheit weist die folgenden Schritte auf:
Es wird eine erste Kunststofffolie in Form einer laufenden Ware z.B. von einer Rolle bereitgestellt, in der mindestens eine Vertiefung ausgeformt wird. Eine Tablette aus wasserabsorbierendem Material wird in die Vertiefung eingebracht, indem loses Material in die Vertiefung eingebracht wird und zu der Tablette verpresst wird. Saatgut wird dann in Form von mindestens einem Saatkorn im Bereich dieser Vertiefung positioniert. Dieses kann entweder auf die Tablette erfolgen oder vor deren Einbringung in der Vertiefung, so dass das Saatgut unterhalb der Tablette liegt. In einem nächsten Schritt wird eine zweite Folie ebenfalls in Form einer laufenden Ware aufgelegt, die dann umlaufend um den Bereich der Vertiefung mit der ersten Folie verbunden wird, bevorzugt in einem Schweißprozess. Anschließend werden die beiden aufeinanderliegenden Folien in einem Bereich außerhalb der umlaufenden Verschweißung geschnitten und so eine Saatguteinheit abgetrennt.

Das beschriebene Herstellungsverfahren ist ein quasi-kontinuierliches Verfahren, bei dem die Saatguteinheiten in kontinuierlicher Folge auf der Basis von Rollenmaterial produziert werden. Zudem entfällt gegenüber dem bekannten Stand der Technik, bei dem wasserlösliches Papier zu Umhüllung der Tablette eingesetzt wird, ein zusätzlicher Kleberauftrag zur Verbindung der beiden Papierhälften der Umhüllung.

Dadurch, dass loses Material in die Vertiefung eingebracht und zu der Tablette verpresst wird, kann die Herstellung der Tablette in den Herstellungsprozess der Saatguteinheit integriert werden, was den Gesamtprozess vereinfacht.

In einer vorteilhaften Ausgestaltung des Verfahrens weisen die Kunststofffolien ein wasserlösliches Kunststoffmaterial auf. Wasserlösliches Kunststoffmaterial, beispielsweise PVOH (Polyvinylalkohol) ist ebenfalls schnell und vollständig wasserlöslich und vollständig kompostierbar, so dass keine Rückstände verbleiben. Vorteilhaft kann das Kunststoffmaterial elastisch verformt werden und so beispielsweise in einem Tiefziehprozess eine beispielsweise topfförmige Vertiefung geformt werden, in der das Material für die Tablette aus dem wasserspeichernden Material eingebracht wird. Weiter vorteilhaft lässt sich Kunststoffmaterial ohne zusätzlichen Klebstoff in einem Schweißprozess prozesstechnisch einfach verbinden.

In einer vorteilhaften Ausgestaltung des Verfahrens enthält die Tablette mineralisches und/oder organisches Material. Bevorzugt enthält die Tablette Schichtsilikat und/oder Naturfasern.

In einer weiteren vorteilhaften Ausgestaltung des Verfahrens wird auf zumindest einer Seite der Tablette mindestens eine Mulde in eine Oberfläche der Tablette eingepresst. Das Saatgut der Saatguteinheit kann mindestens ein Saatkorn umfassen, insbesondere ein Baumsaatkorn. Weiter kann innerhalb der Umhüllung ein Nährstoffkügelchen oder auch mehrere Nährstoffkügelchen angeordnet werden. Bevorzugt werden das mindestens eine Saatkorn und/oder das mindestens eine Nährstoffkügelchen in der mindestens einen Mulde positioniert.

Die Erfindung wird nachfolgend anhand von Ausführungsbeispielen mit Hilfe von Figuren näher erläutert. Die Figuren zeigen:
- Fig.1: eine schematische Skizze einer Vorrichtung zur Herstellung von Saatguteinheiten; und
- Fig. 2a - 2d: jeweils eine Schnittdarstellung verschiedener Ausgestaltungen einer Saatguteinheit.

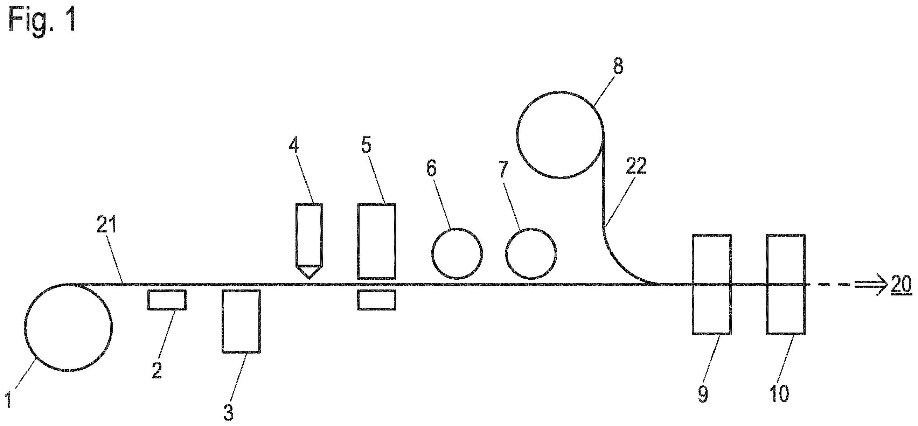

Fig. 1 zeigt in einer schematischen Darstellung eine Vorrichtung zur Herstellung einer Saatguteinheit. Die Vorrichtung dient der Ausführung eines Ausführungsbeispiels eines erfindungsgemäßen Verfahrens zur Herstellung einer solchen Saatguteinheit, das nachfolgend anhand der Fig. 1 erläutert wird.

Die Vorrichtung umfasst eine erste Rolle 1 für eine erste Kunststofffolie 21 einschließlich hier nicht dargestellter Abroll- und Transportvorrichtungen für die von der Rolle 1 abgerollte erste Kunststofffolie 21. Die erste Kunststofffolie 21 kann beispielsweise eine PVOH-Folie sein. Diese bewegt sich im Lauf des Herstellungsverfahrens in der Fig. 1 von der linken in Richtung der rechten Figurenseite, wobei am Ende des Herstellungsprozesses die Abgabe von Saatguteinheiten 20 erfolgt.

In einer (optionalen) Druckvorrichtung 2 kann zunächst die erste Kunststofffolie 1 abschnittsweise mit einem Aufdruck versehen werden, der beispielsweise Art und Produktionsdatum der Saatguteinheit 20 umfasst.

Ein bedruckter Abschnitt wird in einer sich anschließenden Tiefziehvorrichtung 3 so verformt, dass eine topfförmige Vertiefung in der ersten Kunststofffolie 4 entsteht. An Stelle des Tiefziehens kann auch ein anderer formgebender Prozess durchgeführt werden, beispielsweise ein Verformungsprozess mit Hilfe eines Stempels.

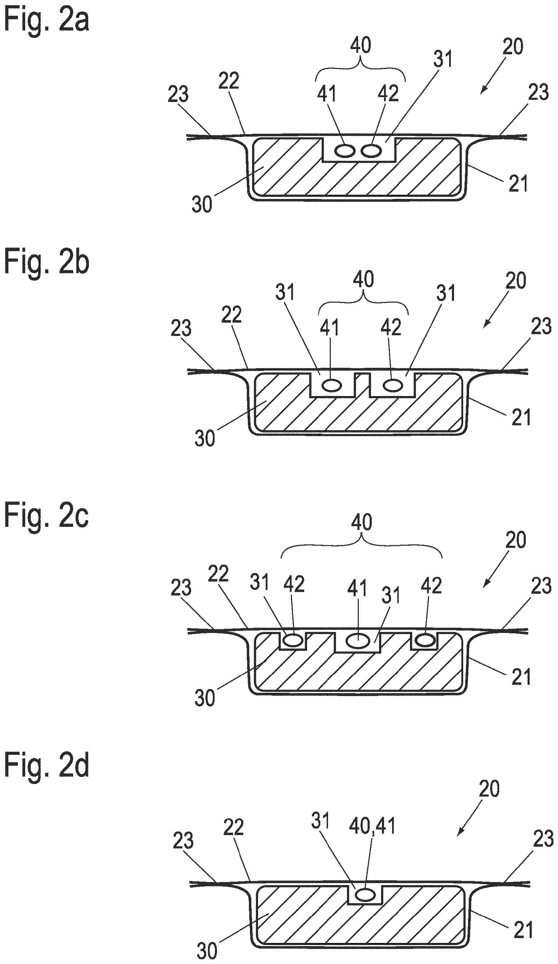

In Fig. 2a ist ein Querschnitt einer Saatguteinheit 20 gezeigt, die in der Vorrichtung gemäß Fig. 1 herstellbar ist. In dieser Figur ist die Verformung der ersten Kunststofffolie 21 erkennbar. Durch die Verformung ist eine topfförmige, in der Draufsicht z.B. runde Vertiefung gebildet, in der sich bei der fertigen Saatguteinheit 20 eine Tablette 30 aus wasserspeicherndem Material befindet. Die Tablette 30 kann beispielsweise aus Vermiculit bestehen oder Vermiculit umfassen. Alternativ können andere mineralische Stoffe, insbesondere Schichtsilikate, oder auch organische Stoffe oder Gemenge solcher Stoffe zur Herstellung der Tablette 30 eingesetzt werden. Die Tablette 30 dient in einem späteren Keimungsprozess als Wasserspeicher, ggf. als Wärmespeicher und auch als Schutz für das Saatgut, sowie als Pufferspeicher zur kontinuierlichen Nährstoffabgabe.

In einem nächsten Herstellungsschritt wird die in der ersten Kunststofffolie 21 gebildete Vertiefung von einer Befülleinheit 4 (s. Fig. 1) mit dem Material, aus dem die Tablette 30 geformt werden soll, befüllt. Das Material, beispielsweise das Vermiculit, wird in Form eines Granulats als Schüttgut in die Vertiefung eingefüllt. In einem darauf folgenden Prozessschritt wird mithilfe einer Presse 5 das lose Material zu der Tablette 30 verpresst. Dabei kann, wie im Ausführungsbeispiel der Fig. 2a zu erkennen ist, durch die Presse 5 beim Pressvorgang eine Mulde 31 in die Tablette 30 eingepresst werden.

In darauf folgenden Prozessschritten werden Funktionsprodukte 40 in die entstandene Mulde 31 bzw. auf die geformte Tablette 30 gelegt. Die Funktionsprodukte 40 umfassen beispielsweise das Saatgut, das beim Beispiel der Fig. 2a in der Form mindestens eines Saatkorns 41 in die Mulde 31 eingelegt wird. Zur Positionierung des Saatkorns 41 dient eine Ablegestation 6. Gegebenenfalls können auch mehr als ein Saatkorn 41 in diesem Prozessschritt abgelegt werden.

Weiter ist in die Mulde 31 beim Ausführungsbeispiel der Fig. 2a ein Nährstoffkügelchen 42 eingelegt. Dieses optionale Nährstoffkügelchen 42 kann beigefügt werden, um im Keimungsprozess des Saatkorns 41 dosiert Nährstoffe abzugeben. Dazu kann das Nährstoffkügelchen 42 selbst wasserlöslich sein, so dass es die Nährstoffe über einen längeren Zeitraum beim Vorliegen von Feuchtigkeit abgibt. Der Ablage des Nährstoffkügelchens 42 in die Mulde 31 dient eine weitere Ablegestation 7.

In einem nächsten Herstellungsschritt wird von einer weiteren Rolle 8 eine zweite Kunststofffolie 22 auf die erste Kunststofffolie 21 und damit auch die eingelegte Tablette 30 mit den Funktionsprodukten 40 aufgelegt und gemeinsam mit der ersten Kunststofffolie 21 durch die verbleibenden Stationen der Vorrichtung geführt. Die zweite Kunststofffolie 22 besteht bevorzugt aus dem gleichen Material wie die erste Kunststofffolie 21.

Als nächster Verfahrensschritt wird in einer Schweißvorrichtung 9 eine umlaufende Verbindungsnaht 23 (vgl. Fig. 2a) zur Verbindung der ersten und der zweiten Kunststofffolien 21, 22 erzeugt. Durch die umlaufende Verbindungsnaht 23 ist die Tablette 30 mit den Funktionsprodukten 40 von einer abgedichteten Umhüllung umschlossen. Weiter verhindert diese Umhüllung, dass die Funktionsprodukte 40 aus der Mulde 31 rutschen, wenn die Saatguteinheit 20 gegenüber der Darstellung der Fig. 2a gedreht wird. Dieser Effekt kann unterstützt werden, wenn der umhüllte Teil der Saatguteinheit mit einem Unterdruck beaufschlagt wird, bevor die Verbindungsnaht 23 fertiggestellt wird.

Die Verbindungsnaht 23 kann beispielsweise in einem thermischen Schweißprozess erstellt werden, indem eine geheizte Matrize auf den Verbund der ersten und zweiten Kunststofffolien 21, 22 gedrückt wird. Auch alternative Schweißverfahren, beispielsweise ein Laser- oder Ultraschallschweißen der beiden Kunststofffolien 21, 22 sind möglich.

Schließlich werden in einem letzten Verfahrensschritt die Saatguteinheiten 20 in einer Separiereinheit 10 voneinander getrennt, beispielsweise indem die Folien 21, 22 zwischen zwei hergestellten Saatguteinheiten 20 geschnitten werden. Auch ein Stanzprozess, der entsprechend der Grundform der Saatguteinheiten 20 diese aus den übereinander gelegten ersten und zweiten Folien 21, 22 ausstanzt, ist hier möglich.

Zur Aussaat wird die Saatguteinheit 20 bevorzugt liegend auf der zweiten Folie 22 ausgebracht, so dass das Material der Tablette 30 das Saatkorn 41 von oben abdeckt und schützt. Sobald sich die wasserlöslichen Folien 21, 22 auflösen, kann auch die Tablette 30 Wasser bzw. Feuchtigkeit aufnehmen und an das Saatgut abgeben. So wird das Saatgut zum Auskeimen gebracht und vor einem Austrocknen geschützt. Der entstehende Keimling durchdringt die Tablette 30 und findet dadurch Halt, bis er im Boden, auf dem die Saatguteinheit 20 liegt, verwurzelt.

In den Fig. 2b-d sind in gleicher Weise wie in Fig. 2a weitere Ausführungsbeispiele einer Saatguteinheit 20, die mit der in Fig. 1 dargestellten Vorrichtung herstellbar ist, gezeigt. Gleiche Bezugszeichen kennzeichnen in diesen Figuren gleiche oder gleichwirkende Elemente wie bei Fig. 2a.

In ihrem Grundaufbau entspricht die Saatguteinheit der Fig. 2b der des Ausführungsbeispiels von Fig. 2a, auf deren Beschreibung hiermit ausdrücklich verwiesen wird.

Im Unterschied zum Beispiel der Fig. 2a sind vorliegend mehrere, hier zwei Mulden 31 in die Tablette 30 eingepresst. Bei diesem Beispiel nimmt jede der Mulden 31 eines der Funktionsprodukte 40 auf, also eine der Mulden 31 das Saatkorn 41 und die zweite der Mulden 31 das Nährstoffkügelchen 42. Auf diese Weise kann ein Abstand des Nährstoffkügelchens 42 vom Saatkorn 41 genauer definiert werden, beispielsweise um eine gleichmäßig und nicht zu hoch konzentrierte Nährstoffabgabe an das Saatkorn 41 zu erzielen.

Die beiden Mulden 31 können wie hier darstellt nebeneinander angeordnet sein. Alternativ ist beispielsweise auch eine konzentrische Anordnung der Mulden 31 möglich. Eine solche Ausführung ist in Fig. 2c gezeigt. Hier ist eine zentrale Mulde 31 für das Saatkorn 41 vorgesehen und eine umlaufende rinnenförmige Mulde für mehrere Nährstoffkügelchen 42.

Grundsätzlich kann die Anzahl der Mulden 31 an die Zahl der Funktionsprodukte 40 angepasst sein und auch größer als zwei sein.

Wie bereits erwähnt ist die Zugabe eines oder mehrerer Nährstoffkügelchen 42 optional. Fig. 2d zeigt ein Ausführungsbeispiel einer Saatguteinheit 20 mit nur einer zentralen Mulde 31, in der nur ein Saatkorn 41 als Funktionsprodukt 40 eingelegt ist.

### Bezugszeichen

- 1: Rolle (für erste Kunststofffolie)
- 2: Druckvorrichtung
- 3: Tiefziehvorrichtung
- 4: Befülleinheit
- 5: Presse
- 6: Ablegestation
- 7: weitere Ablegestation
- 8: weitere Rolle (für zweite Kunststofffolie)
- 9: Schweißvorrichtung
- 10: Separiereinheit

- 20: Saatguteinheit
- 21: erste Kunststofffolie
- 22: zweite Kunststofffolie
- 23: Verbindungsnaht

- 30: Tablette
- 31: Mulde

- 40: Funktionsprodukt
- 41: Saatkorn
- 42: Nährstoffkügelchen

## Patentansprüche

1. Verfahren zur Herstellung einer Saatguteinheit (20) mit den folgenden Schritten:
- Bereitstellen einer ersten Kunststofffolie (21) in Form einer laufenden Ware;
- Ausbilden mindestens einer Vertiefung in der Kunststofffolie (21);
- Einbringen einer Tablette (30) aus wasserabsorbierendem Material in die mindestens eine Vertiefung, indem loses Material in die Vertiefung eingebracht wird und zu der Tablette (30) verpresst wird;
- Positionieren von Saatgut in Form von mindestens einem Saatkorn im Bereich der Vertiefung;
- Auflegen einer zweiten Kunststofffolie (22) in Form einer laufenden Ware auf die erste Kunststofffolie (21) und die Tablette (30);
- Verbinden der ersten und der zweiten Kunststofffolie (21, 22) umlaufend um den Bereich der Vertiefung und der Tablette (30); und
- Abtrennen einer Saatguteinheit (20) aus den Kunststofffolien (21, 22), wobei die Saatguteinheit (20) die Tablette (30) und das Saatgut umfasst.

2. Verfahren nach Anspruch 1, bei dem die Vertiefung in der ersten Kunststofffolie (21) tiefgezogen wird.

3. Verfahren nach Anspruch 1 oder 2, bei dem die erste und die zweite Kunststofffolie (21, 22) miteinander verschweißt werden, um die umlaufende Verbindung zu erstellen.

4. Verfahren nach einem der Ansprüche 1 bis 3, bei dem die Kunststofffolien (21, 22) ein wasserlösliches Kunststoffmaterial aufweisen.

5. Verfahren nach einem der Ansprüche 1 bis 4, bei dem die Tablette (30) mineralisches und/oder organisches Material enthält.

6. Verfahren nach Anspruch 5, bei dem die Tablette (30) Schichtsilikat und/oder Naturfasern enthält.

7. Verfahren nach einem der Ansprüche 1 bis 6, bei dem auf zumindest einer Seite der Tablette (30) mindestens eine Mulde (31) in eine Oberfläche der Tablette (30) eingepresst wird.

8. Verfahren nach einem der Ansprüche 1 bis 7, bei dem das Saatgut mindestens ein Saatkorn (41) umfasst, insbesondere ein Baumsaatkorn.

9. Verfahren nach einem der Ansprüche 1 bis 8, bei dem innerhalb der Umhüllung mindestens eine Nährstoffkügelchen (42) angeordnet wird.

10. Verfahren nach einem der Ansprüche 1 bis 9, bei dem das mindestens eine Saatkorn (41) und/oder die Nährstoffkapsel (42) in der mindestens einen Mulde (31) positioniert werden.

## Claims

1. Method for producing a seed unit (20), comprising the following steps:
- providing a first plastic film (21) in the form of a running product;
- forming at least one indentation in the plastic film (21);
- placing a tablet (30) of water-absorbent material into the at least one indentation by placing loose material into the indentation and compressing it to form the tablet (30);
- positioning of the seeding material in the form of at least one seed in the area of the indentation;
- placing a second plastic film (22) in the form of a running product on the first plastic film (21) and the tablet (30);
- joining the first and second plastic films (21,22) circumferentially around the region of the indentation and the tablet (30); and
- separating a seed unit (20) from the plastic films (21,22), wherein the seed unit (20) comprises the tablet (30) and the seeding material.

2. Method according to claim 1, in which the indentation in the first plastic film (21) is deep-drawn.

3. Method according to claim 1 or 2, in which the first and second plastic films (21,22) are welded together to create the circumferential joint.

4. Method according to one of claims 1 to 3, in which the plastic films (21,22) comprise a water-soluble plastic material.

5. Method according to one of claims 1 to 4, in which the tablet (30) contains mineral and/or organic material.

6. Method according to claim 5, in which the tablet (30) comprises layered silicate and/or natural fibers.

7. Method according to one of claims 1 to 6, in which at least one trough (31) is pressed into a surface of the tablet (30) on at least one side of the tablet (30).

8. Method according to one of claims 1 to 7, in which the seeding material comprises at least one seed (41), in particular a tree seed.

9. Method according to one of claims 1 to 8, in which at least one nutrient pellet (42) is arranged within the envelope.

10. Method according to one of claims 1 to 9, in which the at least one seed (41) and/or nutrient capsule (42) is positioned in the at least one trough (31).

## Revendications

1. Procédé de fabrication d'une unité de semence (20) comprenant les étapes consistant à :
- fournir un premier film plastique (21) sous la forme d'un produit en mouvement ;
- former au moins une dépression dans le film plastique (21) ;
- introduire un comprimé (30) en matériau absorbant l'eau dans ladite au moins une dépression en introduisant un matériau en vrac dans la dépression et en le comprimant pour former le comprimé (30) ;
- positionner une semence sous la forme d'au moins une graine dans la zone de la dépression ;
- poser un deuxième film plastique (22) sous la forme d'un produit en mouvement sur le premier film plastique (21) et le comprimé (30) ;
- relier les premier et deuxième films plastiques (21, 22) périphériquement autour de la zone de la dépression et du comprimé (30) ; et
- détacher une unité de semence (20) des films plastiques (21, 22), l'unité de semence (20) comprenant le comprimé (30) et la semence.

2. Procédé selon la revendication 1, dans lequel la dépression dans le premier film plastique (21) est produite par emboutissage.

3. Procédé selon la revendication 1 ou 2, dans lequel les premier et deuxième films plastiques (21, 22) sont soudés ensemble pour réaliser la liaison périphérique.

4. Procédé selon l'une des revendications 1 à 3, dans lequel les films plastiques (21, 22) présentent une matière plastique soluble dans l'eau.

5. Procédé selon l'une des revendications 1 à 4, dans lequel le comprimé (30) contient une matière minérale et/ou organique.

6. Procédé selon la revendication 5, dans lequel le comprimé (30) contient un silicate stratifié et/ou des fibres naturelles.

7. Procédé selon l'une des revendications 1 à 6, dans lequel au moins une cuvette (31) est pressée dans une surface du comprimé (30) sur au moins un côté du comprimé (30).

8. Procédé selon l'une des revendications 1 à 7, dans lequel la semence comprend au moins une graine (41), en particulier une graine d'arbre.

9. Procédé selon l'une des revendications 1 à 8, dans lequel au moins une bille de nutriments (42) est disposée à l'intérieur de l'enveloppe.

10. Procédé selon l'une des revendications 1 à 9, dans lequel ladite au moins une graine (41) et/ou la bille de nutriments (42) sont placées dans ladite au moins une cuvette (31).
